# EUROPÄISCHE PATENTSCHRIFT

(11) **EP 2 090 789 B1**
(45) Veröffentlichungstag und Bekanntmachung des Hinweises auf die Patenterteilung: **07.09.2011**
(21) Anmeldenummer: 09152582.4
(22) Anmeldetag: 11.02.2009
(51) Int. Cl.: F16B 2/06, F16B 7/04

(54) **Verbinder für rinnenförmige Profilstäbe und Verbindungsanordnung**
Connector for trough shaped profile bars and connection arrangement
Connecteur pour tiges de profil en forme de cannelure et agencement de connexion

(30) Priorität: 18.02.2008 DE 202008002253 U
(43) Veröffentlichungstag der Anmeldung: 19.08.2009
(73) Patentinhaber: VIEGA GmbH & Co. KG, 57439 Attendorn (DE)
(72) Erfinder: Wessel, Heinz-Werner, 58840 Plettenberg (DE); Manegold, Christoph, 46242 Bottrop (DE); Droste, Stefan, 57439 Attendorn (DE); Arens, Klaus, 57482 Wenden (DE); Skrodolies, Klaus, Dr., 57358 Lennestadt (DE)
(74) Vertreter: Cohausz & Florack

(56) Entgegenhaltungen:
- EP-A2- 1 441 081
- EP-A2- 1 780 345
- DE-A1- 10 060 597
- FR-A1- 2 653 798

## Beschreibung

Die Erfindung betrifft einen Verbinder für rinnenförmige Profilstäbe, insbesondere zur Bildung von Sanitärinstallationen, mit zwei einander gegenüberliegenden Platten, die durch mindestens ein Befestigungsmittel und ein Zwischenstück miteinander verbunden sind und klemmend an einem rinnenförmigen Profilstab befestigbar sind, wobei an äußeren Kanten der Platten Vorsprünge ausgebildet sind, die in Eingriff mit an den Profilstäben ausgebildeten Nuten bringbar sind, wobei an dem Zwischenstück zwischen den äußeren Kanten der Platten mindestens ein Abstandshalter angeordnet ist, der zur Abstützung eines rinnenförmigen Profilstabes zwischen zwei gegenüberliegenden Wandabschnitten des Profilstabes einfügbar ist, sowie eine Verbindungsanordnung mit einem solchen Verbinder.

Aus der DE 100 60 597 Al ist ein Verbinder für Profilstäbe bekannt, der zwei Platten aufweist, die mit einer Schraube lösbar an wenigstens einem Profilstab befestigbar sind und dabei jeweils mit geneigten Spannflächen in Nuten von einem oder mehreren Profilstäben einfassen. Die beiden Platten des Verbinders sind von einer Feder auf einen bestimmten Abstand zueinander gehalten, so dass die Platten elastisch federnd in die Nuten der Profilstäbe einschnappbar sind. Dieser bekannte Verbinder hat den Nachteil, dass er sich nur an geschlossenen Profilstäben einsetzen lässt. Solche geschlossenen, eine innere Hohlkammer aufweisende Profile lassen sich ohne Kern in einer Stanze oder Pressmaschine nur schlecht ablängen. Da die Profilstäbe in der Länge meist mehrere Meter lang sind, ist es nicht möglich, einen entsprechenden Kern von mehreren Metern in den Profilstab einzuschieben. Deshalb müssen geschlossene Profilstäbe aufwendig mittels einer Säge gekürzt werden, um eine Deformierung des Profilstabes im Bereich der Trennstelle zu vermeiden.

Für das Ablängen von Profilstäben ist es ferner bekannt, offene Profilstäbe vorzusehen, die an einer Seite zur Einführung eines Kerns geöffnet sind. Solche Profilstäbe, die auch als rinnenförmige Profilschienen oder C-förmige Profile bezeichnet werden, können dann entsprechend fixiert und abgelängt werden. Zusätzlich können auch erforderliche Bohrungen und Ausstanzungen vorgesehen werden. An der offenen Seite können diese Profilstäbe jedoch nicht mit einem Verbinder der aus der DE 100 60 597 Al bekannten Art festgeklemmt werden, da die Profilstäbe hierfür keine ausreichende Stabilität besitzen.

Die EP 1 441 081 A2 offenbart einen Verbinder für offene Profilstäbe, der zwei einander gegenüberliegende Platten aufweist, die über eine Schraube und ein Zwischenstück miteinander verbunden und klemmend an einem offenen Profilstab festlegbar sind. Hierzu sind an äußeren Kanten der Platten Vorsprünge ausgebildet, die in Eingriff mit an dem Profilstab vorgesehenen Nuten bringbar sind. An dem Zwischenstück ist zwischen den äußeren Kanten der Platten mindestens ein hervorstehender Abstandshalter angeordnet, der zur Abstützung des Profilstabes zwischen zwei gegenüberliegenden Wandabschnitten des Profilstabes einfügbar ist. Der Abstandshalter ist dabei federnd ausgebildet und elastisch von einer hervorstehenden Position in eine zurückgezogene Position bewegbar. Dieser bekannte Verbinder hat sich in der Praxis grundsätzlich bewährt. Es hat sich jedoch gezeigt, dass die funktionssichere Handhabung dieses Verbinders manchen Benutzern schwierig erscheint und insofern eine Unterweisung des Benutzers gegebenenfalls erforderlich wird.

Des Weiteren ist in der EP 1 780 345 A2 ein Verbinder für rinnenförmige Profilsstäbe beschrieben, bei dem zur Verbesserung der funktionssicheren Handhabung in dem Zwischenstück oder zwischen den Platten und dem Zwischenstück zwei parallel zueinander verlaufende Spalte zur Aufnahme zweier gegenüberliegender Wandabschnitte des rinnenförmigen Profilstabes vorgesehen sind. Dieser Verbinder ist für Profilstäbe bestimmt, die ein anderes Profil aufweisen als die Profilstäbe, für die der aus der EP 1 441 081 A2 bekannte Verbinder bestimmt ist. Der für den Verbinder gemäß der EP 1 780 345 A2 erforderliche Profilstab weist an seiner offen Seite Eckbereiche auf, in denen jeweils eine Nut ausgebildet ist, wobei die Eckbereiche in nach außen vorspringende Stegabschnitte übergehen, die zwischen den Nuten angeordnet sind.

Der vorliegenden Erfindung liegt die Aufgabe zugrunde, einen Verbinder bereitzustellen, der sowohl für offene als auch geschlossene Profilstäbe entsprechend dem aus der EP 1 441 081 A2 bekannten offenen Profil geeignet ist, wobei die funktionssichere Handhabung des Verbinders gegenüber dem Stand der Technik verbessert, insbesondere erleichtert sein soll.

Diese Aufgabe wird durch einen Verbinder mit den Merkmalen des Anspruchs 1 gelöst. Bevorzugte und vorteilhafte Ausgestaltungen des erfindungsgemäßen Verbinders sind in den Unteransprüchen angegeben.

Der erfindungsgemäße Verbinder ist dadurch gekennzeichnet, dass der Abstandshalter durch eine Clip-Verbindung oder Steckverbindung lösbar an dem Zwischenstück angebracht ist.

Der erfindungsgemäße Verbinder zeichnet sich durch eine einfache Montage aus und bietet eine besonders sichere Verbindung.

Der Abstandshalter stabilisiert den rinnenförmigen Profilstab, so dass dessen Wandabschnitte, welche seine offene Seite begrenzen, auf Abstand gehalten werden, wenn der Verbinder an der offenen Seite des Profilstabes klemmend befestigt wird. Der lösbar an dem Zwischenstück des Verbinders angebrachte Abstandshalter sollte immer dann Verwendung finden, wenn der Verbinder an der offenen Seite des Profilstabes montiert wird.

Wenn der Verbinder an einer geschlossenen Seite des rinnenförmigen Profilstabes montiert werden soll, kann der Monteur den Abstandshalter vom Zwischenstück lösen und entfernen. Die Handhabung des erfindungsgemäßen Verbinders ist somit einfach und seine Funktion besonders sicher.

Nach einer bevorzugten Ausgestaltung des erfindungsgemäßen Verbinders weist dessen Abstandshalter an seiner dem Zwischenstück zugewandten Seite mindestens zwei Rastvorsprünge auf, wobei das Zwischenstück Ausnehmungen oder Hinterschneidungen aufweist, in welche die Rastvorsprüngen eingreifen. Hierdurch wird zwischen dem jeweiligen Abstandshalter und dem Zwischenstück eine sehr zuverlässige Clip-Verbindung erzielt.

Des Weiteren ist vorgesehen, dass die den beiden Rastvorsprüngen zugeordneten Ausnehmungen oder Hinterschneidungen in Längsrichtung des Zwischenstückes gesehen hintereinander angeordnet sind. Hierdurch lässt sich bei vorgegebenen Abmessungen des Verbinders der Abstand der beiden Rastvorsprünge voneinander relativ groß wählen. Dies erleichtert das elastische Auseinanderspreizen der Rastvorsprünge beim Anbringen des Abstandshalters am Zwischenstück bzw. beim Lösen des Abstandshalters vom Zwischenstück.

Der Abstandshalter lässt sich manuell gut greifen, wenn nach einer weiteren bevorzugten Ausgestaltung des erfindungsgemäßen Verbinders das Zwischenstück an seiner dem Abstandshalter zugewandten Seite eine ebene Stirnfläche besitzt, der Abstandshalter einen Sockel aufweist, über den er an der ebenen Stirnfläche anliegt, und der Abstandshalter einen plattenförmigen Abschnitt aufweist, der den Sockel an zwei entgegengesetzten Seiten überragt. Der plattenförmige Abschnitt ist dabei vorzugsweise länglich ausgebildet, erstreckt sich im am Zwischenstück angebrachten Zustand in Längsrichtung des Zwischenstücks und überragt den Sockel an seinen Querseiten. In dieser Ausgestaltung lässt sich der Abstandshalter sehr gut manuell ergreifen und gegebenenfalls vom Zwischenstück entfernen.

Eine weitere vorteilhafte Ausgestaltung des erfindungsgemäßen Verbinders besteht darin, dass die Rastvorsprünge mit Abstand zu dem Sockel an der Unterseite des plattenförmigen Abschnitts angeformt sind. Hierdurch lassen sich bei geringer Bauhöhe des Abstandshalters relativ lange Rastvorsprünge realisieren, wodurch das elastische Auseinanderspreizen der Rastvorsprünge beim Anbringen des Abstandshalters am Zwischenstück bzw. beim Lösen des Abstandshalters vom Zwischenstück erleichtert wird.

Eine andere vorteilhafte Ausgestaltung des erfindungsgemäßen Verbinders ist dadurch gekennzeichnet, dass das Zwischenstück eine Abstützfläche zur Anlage an einer der geschlossenen Seiten des rinnenförmigen Profilstabes aufweist, wobei in der Abstützfläche eine Vertiefung ausgebildet ist, in die der zwischen zwei gegenüberliegenden Wandabschnitten des rinnenförmigen Profilstabes einfügbare Abschnitt des Abstandshalters versenkbar ist, sodass die Oberseite dieses Abschnittes in dessen versenkter Position in der Ebene der Abstützfläche des Zwischenstücks oder tiefer als diese Ebene liegt. Auch diese Ausgestaltung erleichtert die Handhabung eines gattungsgemäßen Verbinders bei hoher Funktionssicherheit.

In weiterer Ausgestaltung dieser Variante ist vorgesehen, dass der Abstandshalter mit mindestens einem Stellelement versehen ist, mittels dem er bei versenkter Position aus der Vertiefung des Zwischenstücks herausbewegt werden kann, wobei mindestens eine der Platten einen Durchbruch aufweist, durch den das Stellelement nach außen geführt ist. Der Durchbruch ist dabei vorzugsweise als Langloch ausgebildet. Anhand der Position des Stellelements in dem Langloch lässt sich dann leicht an dem jeweiligen an den rinnenförmigen Profilstäben montierten Verbinder kontrollieren, in welcher Position sich der Abstandshalter befindet bzw. ob bei einer an der offenen Seite des rinnenförmigen Profilstabes erfolgten Montage der Abstandshalter zur Abstützung des Profilstabes zwischen die gegenüberliegenden Wandabschnitte des Profilstabes eingefügt ist.

Nachfolgend wird die Erfindung anhand einer mehrere Ausführungsbeispiele darstellenden Zeichnung näher erläutert. Es zeigen:
- Fig. 1: eine perspektivische Ansicht eines erfindungsgemäßen Verbinders gemäß einem ersten Ausführungsbeispiel, der jeweils an der offenen Seite zweier rinnenförmiger Profilstäbe montiert ist;
- Fig. 2: eine Draufsicht der in Fig. 1 dargestellten Verbindungsanordnung;
- Fig. 3: eine Schnittansicht der Verbindungsanordnung entlang der Schnittlinie A-A der Fig. 2;
- Fig. 4: eine weitere perspektivische Ansicht des Verbinders der Fig. 1, der hier jeweils an einer geschlossenen Seite zweier rinnenförmiger Profilstäbe montiert ist;
- Fig. 5: eine Draufsicht der in Fig. 4 dargestellten Verbindungsanordnung;
- Fig. 6: eine Schnittansicht der Verbindungsanordnung entlang der Schnittlinie A-A der Fig. 5;
- Fig. 7: eine weitere perspektivische Ansicht des Verbinders der Fig. 1 ohne Abstandshalter;
- Fig. 8: eine Seitenansicht des Verbinders der Fig. 7;
- Fig. 9: eine Draufsicht des Verbinders der Fig. 7;
- Fig. 10: eine Schnittansicht des Verbinders entlang der Schnittlinie A-A der Fig. 9;
- Fig. 11: eine weitere perspektivische Ansicht des Verbinders der Fig. 1;
- Fig. 12: eine Seitenansicht des Verbinders der Fig. 11;
- Fig. 13: eine Draufsicht des Verbinders der Fig. 11;
- Fig. 14: eine Schnittansicht des Verbinders entlang der Schnittlinie A-A der Fig. 13;
- Fig. 15: eine perspektivische Ansicht eines erfindungsgemäßen Verbinders gemäß einem zweiten Ausführungsbeispiel, der jeweils an der offenen Seite zweier rinnenförmiger Profilstäbe montiert ist;
- Fig. 16: eine Draufsicht der in Fig. 15 dargestellten Verbindungsanordnung;
- Fig. 17: eine Schnittansicht der Verbindungsanordnung entlang der Schnittlinie A-A der Fig. 16;
- Fig. 18: eine weitere perspektivische Ansicht des Verbinders der Fig. 15;
- Fig. 19: eine Seitenansicht des Verbinders der Fig. 18;
- Fig. 20: eine Draufsicht des Verbinders der Fig. 18;
- Fig. 21: eine Schnittansicht des Verbinders entlang der Schnittlinie A-A der Fig. 20;
- Fig. 22: eine weitere perspektivische Ansicht des Verbinders der Fig. 15, der hier jeweils an einer geschlossenen Seite zweier rinnenförmiger Profilstäbe montiert ist;
- Fig. 23: eine Draufsicht der in Fig. 22 dargestellten Verbindungsanordnung;
- Fig. 24: eine Schnittansicht der Verbindungsanordnung entlang der Schnittlinie A-A der Fig. 23;
- Fig. 25: eine weitere perspektivische Ansicht des Verbinders der Fig. 15 mit eingedrückten Abstandshaltern; und
- Fig. 26: eine Seitenansicht des Zwischenstücks des Verbinders der Fig. 15 mit daran lösbar gehaltenen Abstandshaltern.

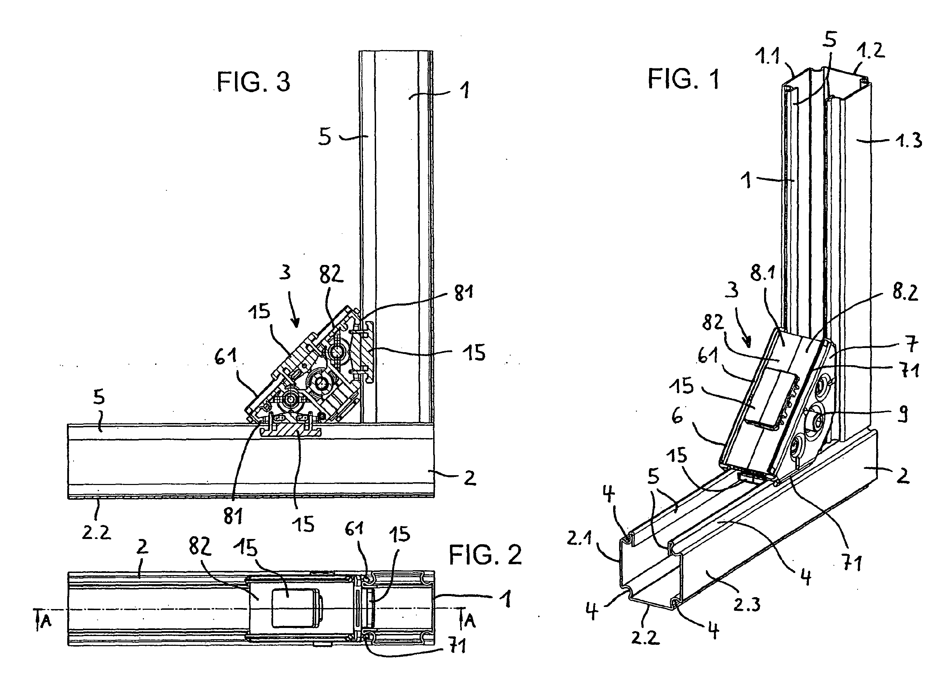

In den Figuren 1 bis 6 sind zwei Profilstäbe 1, 2 dargestellt, die rechtwinklig zueinander angeordnet und durch einen Verbinder 3 miteinander verbunden sind. Die Profilstäbe 1, 2 bestehen jeweils aus einem offenen, rinnenförmigen Profilstab. Der Profilstab 2 kann auch als C-förmiges Profil bezeichnet werden. Er umfasst drei Seitenwände 2.1, 2.2, 2.3, die im Eckbereich jeweils eine rund ausgebildete Nut 4 besitzen. An seiner offenen Seite weist der Profilstab 1, 2 in das Profilinnere umgebogene Wandabschnitte 5 auf.

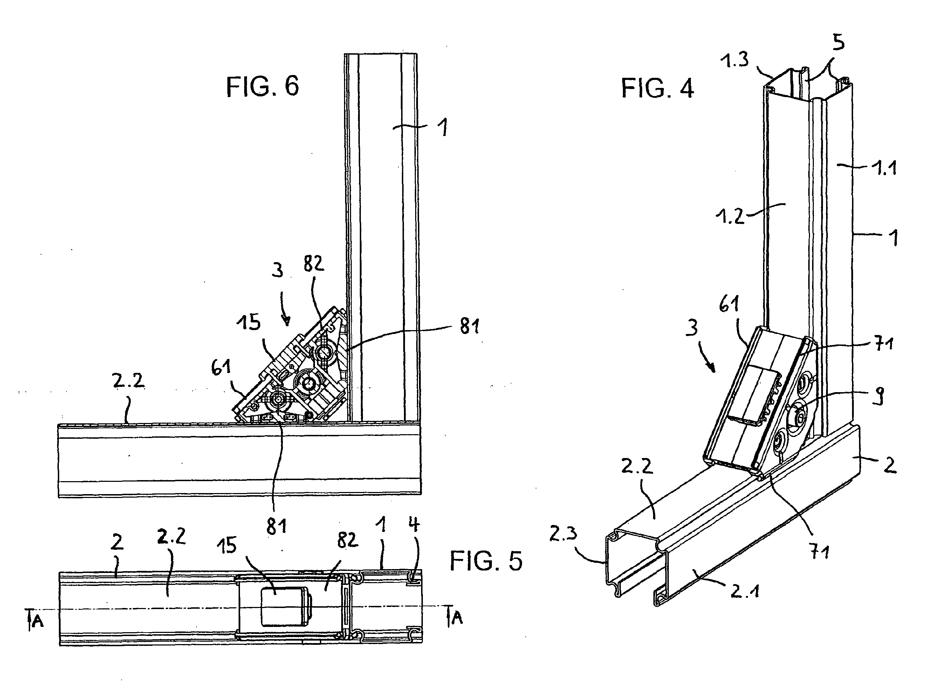

In den Figuren 1 bis 3 ist der Verbinder 3 an der offenen Seite des jeweiligen Profilstabes 1, 2 montiert. Der Verbinder 3 kann jedoch an allen Seiten des Profilstabes klemmend befestigt werden, also auch an einer der geschlossenen Seitenwände 2.1, 2.2 oder 2.3, wie die Figuren 4 bis 6 zeigen.

Der Verbinder 3 umfasst zwei einander gegenüberliegende Platten 6, 7 und ein Zwischenstück 8. Die Platten 6, 7 bestehen vorzugsweise aus Metall, beispielsweise aus Zink-Druckguss oder verzinktem Blech, während das Zwischenstück 8 vorzugsweise aus Kunststoff hergestellt ist. Die Platten 6, 7 sind mittels einer Schraube 9 (Innensechskantschraube) verbunden, wobei an der Platte 7 der Kopf der Schraube 9 und an der Platte 6 ein eingepresstes Gewinde oder eine Mutter angeordnet sind. Das Zwischenstück 8 weist drei Stirnflächen (Abstützflächen) auf, und zwar zwei kürzere Stirnflächen 81 und eine längere Stirnfläche 82, wobei die beiden kürzeren Stirnflächen 81 im Wesentlichen rechtwinklig zueinander verlaufen, während die längere Stirnfläche 82 mit den beiden kürzeren Stirnflächen 81 einen Winkel von jeweils 45° einschließt. Die jeweilige Stirnfläche 81, 82 ist im Wesentlichen eben ausgebildet.

Entsprechend den drei im Wesentlichen ebenen Stirnflächen 81, 82 des Zwischenstücks 8 sind an den Platten 6, 7 des Verbinders 3 jeweils drei geradlinige äußere Kanten ausgebildet, von denen zwei rechtwinklig zueinander verlaufen und die dritte Kante mit einer der beiden anderen Kanten jeweils einen Winkel von etwa 45° einschließt. An diesen Kanten ist jeweils ein Vorsprung 61, 71 ausgebildet. Zur Verbindung zweier Profilstäbe 1, 2 greifen zumindest zwei dieser Vorsprünge 61, 71 in die Nuten 4 der Profilstäbe 1, 2 ein und legen den Verbinder 3 somit an den Profilstäben 1, 2 klemmend fest. Mit dem Verbinder 3 lassen sich somit Profilstäbe 1, 2 in Winkeln von 45° und 90° miteinander verbinden.

Das Zwischenstück 8 ist vorzugsweise zweiteilig ausgebildet und umfasst eine erste Hälfte 8.1 und eine zweite Hälfte 8.2, die ineinander steckbar sind. Hierfür sind an einer Seite der Hälfte 8.1 Zapfen ausgebildet, die in gegenüberliegende Öffnungen der anderen Hälfte 8.2 eingreifen. An der anderen Hälfte 8.2 sind gleiche Zapfen ausgebildet, die dann in zugeordnete Öffnungen an der ersten Hälfte 8.1 eingreifen. Die beiden Hälften 8.1, 8.2 des Zwischenstücks 8 sind baugleich ausgebildet und können somit mit dem gleichen Formwerkzeug hergestellt werden.

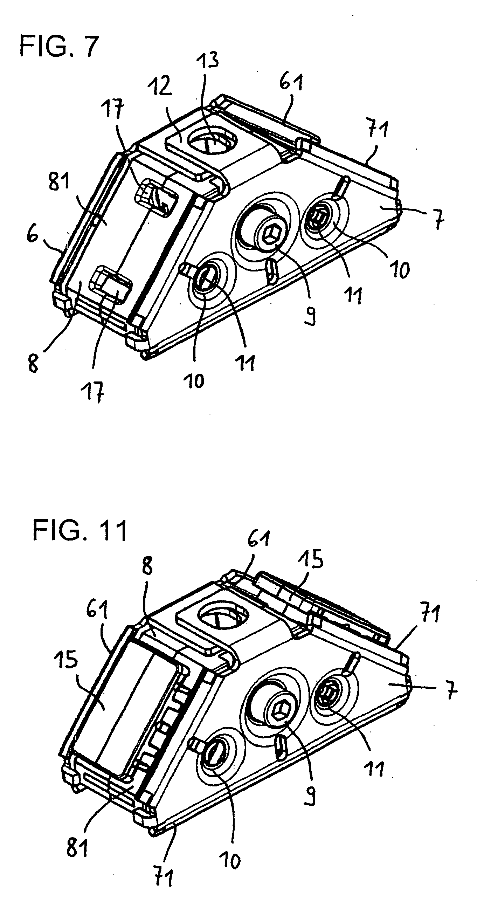

An den Platten 6, 7 sind Öffnungen 10 vorgesehen, in die Rastmittel zur Vorfixierung der Platten 6, 7 an dem Zwischenstück 8 einfügbar sind. Dabei sind an der zur Platte 6 bzw. 7 gewandten Seite des Zwischenstücks 8 Zapfen 11 ausgebildet, die einen verdickten Endabschnitt aufweisen (Fig. 7). In dem verdickten Endabschnitt ist ein Schlitz ausgebildet, so dass der verdickte Endabschnitt elastisch zusammengedrückt und in die Öffnung 10 der Platte 6, 7 eingefügt werden kann. Der verdickte Endabschnitt rastet dabei derart an der Öffnung 10 ein, dass die Platte 6 bzw. 7 vorfixiert an dem Zwischenstück 8 gehalten ist.

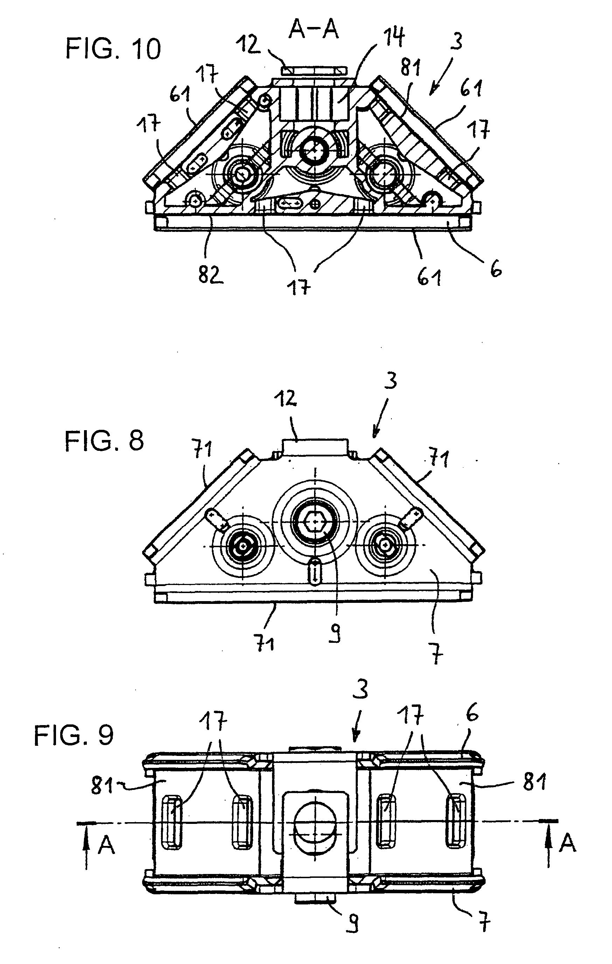

Ferner ist an einem oberen Abschnitt der Platten 6, 7 jeweils ein rechwinklig abgewinkelter Flansch 12 vorhanden, der mit einer Öffnung 13 versehen ist. Hierdurch ergibt sich eine weitere Befestigungsmöglichkeit an dem Verbinder 3. Hierzu kann beispielsweise eine Mutter 14 in den Verbinder 3 eingelegt werden und eine passende Schraube (nicht gezeigt) durch die Öffnung 13 in die Mutter 14 eingedreht werden (siehe Figuren 7 und 10).

Zwischen den äußeren Kanten der Platten 6, 7 ist ein Abstandshalter 15 angeordnet, der an dem Zwischenstück 8 lösbar angebracht ist und zur Abstützung des rinnenförmigen Profilstabes 1, 2 zwischen die gegenüberliegenden Wandabschnitten 5 des Profilstabes 1, 2 eingefügt werden kann.

Der Abstandshalter 15 sorgt für eine Stabilisierung der sich gegenüberliegenden Seitenwände 5 des offenen Profils und verhindert eine übermäßige Deformierung des Profils im Bereich der Verbindung. Der Abstandshalter 15 ist durch eine Clip-Verbindung lösbar an dem Zwischenstück 8 befestigt. Hierzu ist der Abstandshalter 15 an seiner dem Zwischenstück 8 zugewandten Seite mit zwei Rastvorsprüngen 16 versehen, wobei das Zwischenstück 8 in seinen Stirnflächen 81, 82 jeweils zwei Ausnehmungen 17 aufweist, in welche die Rastvorsprünge 16 einsteckbar sind. An jeder der Stirnflächen 81, 82 des Zwischenstücks 8 kann somit ein Abstandshalter 15 lösbar angeclipst werden. In den Figuren 7 bis 10 ist der Verbinder 3 ohne Abstandshalter gezeigt, während die Figuren 11 bis 14 den Verbinder 3 mit drei daran angeclipsten Abstandshaltern 15 zeigen.

Die Ausnehmungen 17 in den Stirnflächen 81, 82 des Zwischenstücks 8 haben die Form von Langlöchern. Sie sind in Längsrichtung des Zwischenstückes 8 betrachtet hintereinander angeordnet. Die Längsachse der jeweiligen Ausnehmung 17 verläuft rechtwinklig zur Längsmittelebene des Zwischenstücks 8.

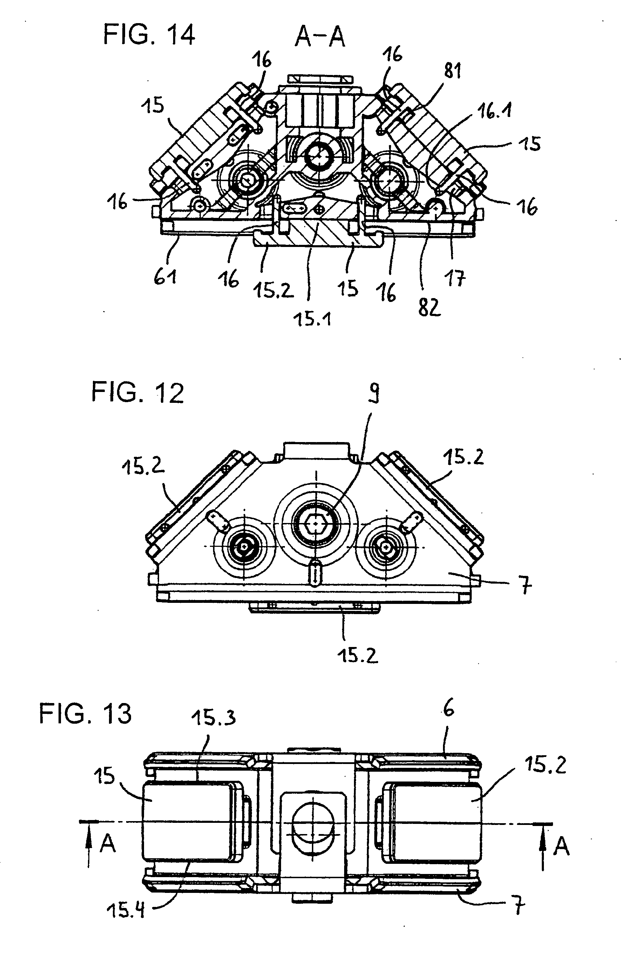

Die Rastvorsprünge 16 sind zungenförmig ausgebildet und weisen nasenförmige Enden 16.1 auf, die bei am Zwischenstück 8 angebrachtem Abstandshalter 15 den die Stirnfläche 81 bzw. 82 definierenden Wandabschnitt des Zwischenstücks 8 hintergreifen (siehe Fig. 14).

Der Abstandshalter 15 weist einen Sockel 15.1 auf, über den er an der ebenen Stirnfläche 81 bzw. 82 des Zwischenstücks 8 anliegt. Ferner weist der Abstandshalter 15 einen plattenförmigen, im Wesentlichen rechteckigen Abschnitt 15.2 auf, der bei Montage des Verbinders 3 an der offenen Profilseite zwischen die beiden gegenüberliegenden Wandabschnitte 5 des rinnenförmigen Profilstabes 1, 2 eingefügt wird. Der plattenförmige Abschnitt 15.2 weist seitliche, parallel zueinander verlaufende Anlageflächen 15.3, 15.4 auf, an denen die nach innen gebogenen Wandabschnitte 5 des offenen Profils nach Festziehen der Schraube 9 des Verbinders 3 anliegen (siehe Figuren 2, 3 und 13).

Der plattenförmige Abschnitt 15.2 ist länglich ausgebildet und erstreckt sich in der montierten Stellung des Abstandshalters 15 in Längsrichtung des Zwischenstücks 8. Die Figuren 11, 13 und 14 zeigen, dass der plattenförmige Abschnitt 15.2 den Sockel 15.1 an seinen Querseiten überragt. Auch ist in Fig. 14 zu erkennen, dass die Rastvorsprünge 16 mit Abstand zu dem Sockel 15.1 an der Unterseite des plattenförmigen Abschnitts 15.2 angeformt sind.

Wenn der Verbinder 3 an einer geschlossenen Seite 1.1, 1.2, 1.3; 2.1, 2.2 oder 2.2 des Profilstabes 1, 2 montiert werden soll, wird zuvor der ablösbare Abstandshalter 15 von der Stirnfläche 81 oder 82, die später an der geschlossenen Profilseite anliegt, entfernt. In Fig. 6 ist zu sehen, dass die kürzeren Stirnflächen 81 des Zwischenstücks 8 jeweils ohne Abstandshalter 15 an einer geschlossenen Profilseite anliegenden, während die längere Stirnfläche 82 noch mit einem Abstandshalter versehen ist.

Die an einer geschlossenen Seite 1.1, 1.2, 1.3 bzw. 2.1, 2.2 oder 2.3 des Profilstabes 1, 2 anlegbare Stirnfläche 81, 82 des Zwischenstückes 8 ist an einem Abschnitt desselben ausgebildet, der im Wesentlichen biegestarr am Zwischenstück 8 gehalten ist (vgl. Fig. 6). Im Gegensatz zu dem aus der EP 1 441 081 A2 bekannten Verbinder weist das Zwischenstück 8 des Verbinders 3 gemäß der vorliegenden Erfindung keinen federelastisch eindrückbaren Abstandshalter 15 auf. Hierdurch sind die Konstruktion und die Herstellung des erfindungsgemäßen Verbinder 3 vereinfacht, so dass eine Verringerung der Herstellungskosten gegenüber dem bekannten Verbinder erzielt werden kann.

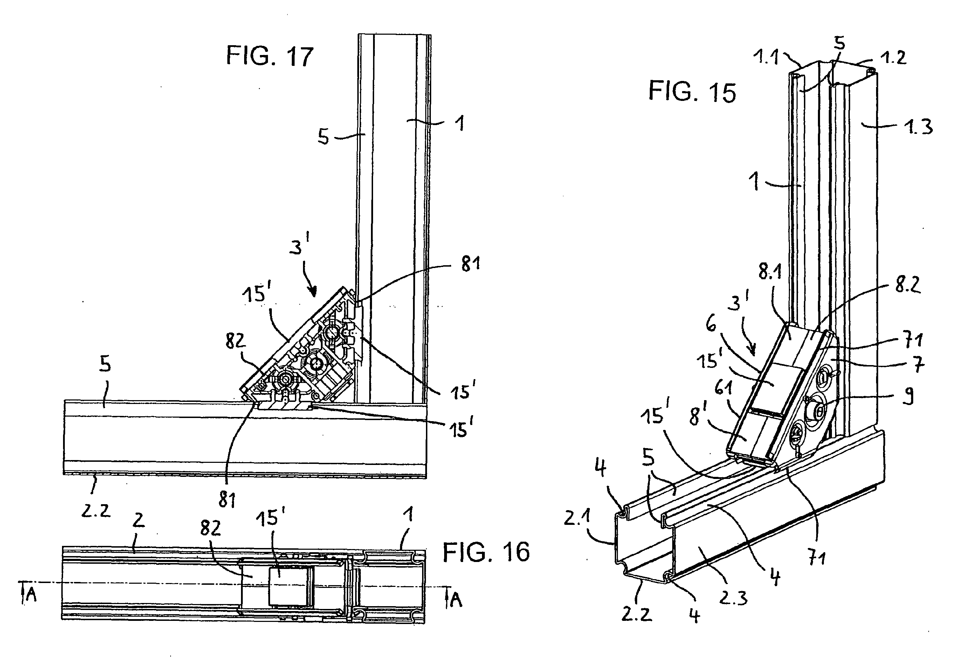

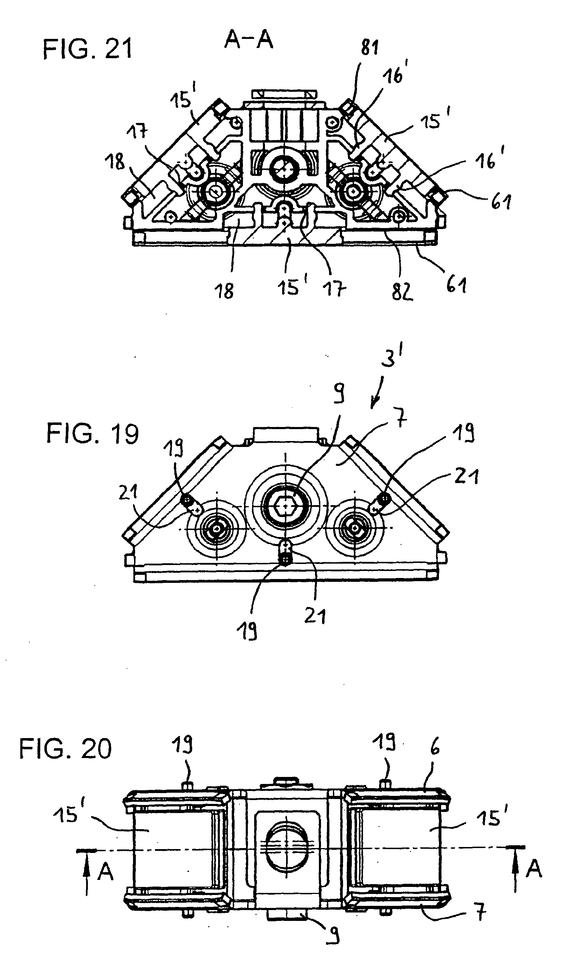

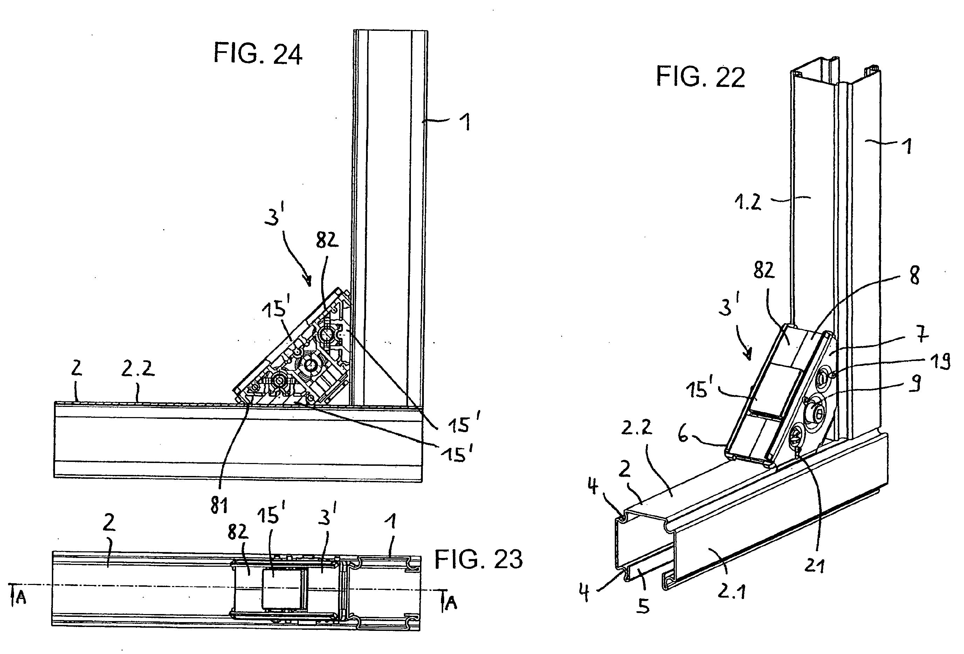

In den Figuren 15 bis 26 ist ein weiteres Ausführungsbeispiel eines erfindungsgemäßen Verbinders 3' gezeigt. Auch bei diesem Ausführungsbeispiel umfasst der Verbinder 3' an den Stirnflächen 81, 82 seines Zwischenstücks 8' angeordnete Abstandshalter 15', die jeweils durch eine Clip-Verbindung mit dem Zwischenstück 8' lösbar verbunden sind. Der jeweilige Abstandshalter 15' ist hierzu an seiner dem Zwischenstück 8' zugewandten Seite mit zungenförmigen Rastvorsprüngen 16' versehen, die in zugeordnete Ausnehmungen 17 des Zwischenstücks 8' formschlüssig eingreifen.

Der Abstandshalter 15' weist wiederum einen plattenförmigen, im Wesentlichen rechteckigen Abschnitt 15.2 auf. Die Stirnflächen 81, 82 des Zwischenstück 8' definieren jeweils eine Abstützfläche zur Anlage an einer der geschlossenen Seiten 1.1, 1.2, 1.3; 2.1, 2.2, 2.3 des rinnenförmigen Profilstabes 1, 2. In der jeweiligen Abstützfläche (Stirnfläche) 81, 82 ist eine Vertiefung 18 ausgebildet, in die der zwischen die gegenüberliegenden Wandabschnitte 5 des rinnenförmigen Profilstabes 1, 2 einfügbare plattenförmige Abschnitt 15.2 des Abstandshalters 15' versenkt werden kann, sodass die Oberseite dieses Abschnittes 15.2 in der versenkten Position des Abstandshalters 15' in der Ebene der Abstützfläche 81, 82 des Zwischenstücks liegt, d.h. flächenbündig mit der Oberseite der Abstützfläche 81 bzw. 82 abschließt.

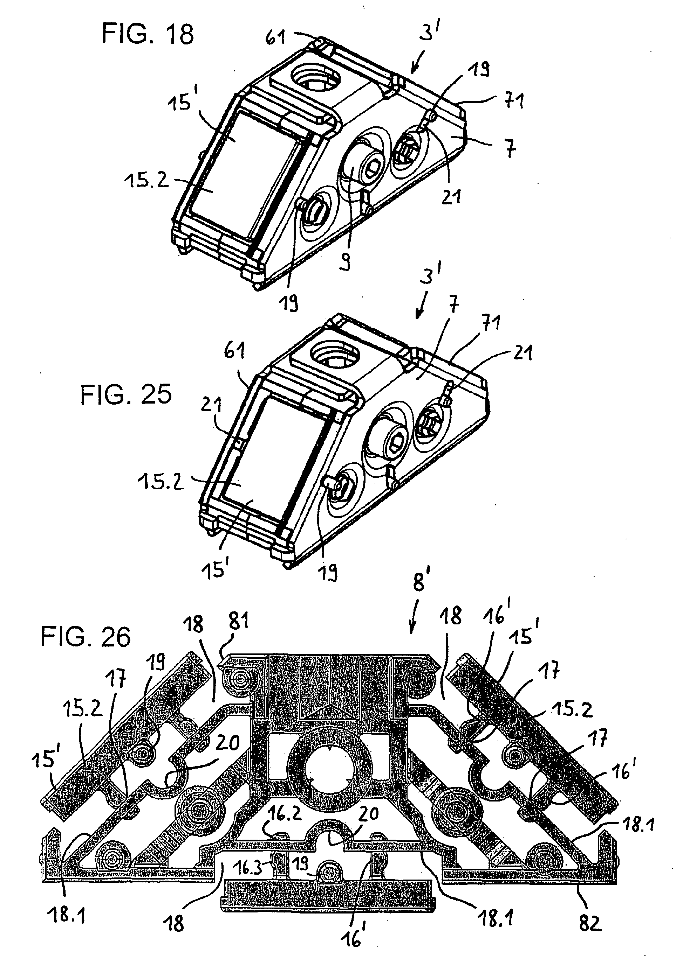

Die Ausnehmungen (Durchbrüche) 17 zur Aufnahme der Rastvorsprünge 16' des Abstandshalters 15' sind im Boden 18.1 der jeweiligen Vertiefung 18 ausgebildet. An jedem der Rastvorsprünge 16' sind zwei Ausnehmungen bzw. Nasen 16.2, 16.3 ausgebildet, wobei die eine Ausnehmung oder Nase 16.3 einer Rastsicherung des Abstandshalters 15' in dessen versenkter Position und die andere Ausnehmung oder Nase 16.2 einer Rastsicherung des Abstandshalters 15' in dessen gegenüber der Abstützfläche 81 bzw. 82 des Zwischenstücks 8' nach außen vorstehender Position dient (siehe Fig. 26).

Des Weiteren ist jeder der Abstandshalter 15' des in den Figuren 15 bis 26 dargestellten Verbinders 3' mit einem stiftförmigen Stellelement 19 versehen. Mittels des Stellelements 19 kann der plattenförmige Abschnitt 15.2 des Abstandshalters 15' bei versenkter Position aus der Vertiefung 18 des Zwischenstücks 8' herausbewegt werden. Das stiftförmige Stellelement 19 ist an der Unterseite des plattenförmigen Abschnitts 15.2 des Abstandshalters 15' befestigt. In den Boden 18.1 der Vertiefung 18 ist zwischen den dortigen Ausnehmungen (Durchbrüchen) 17, in welche die Rastvorsprünge 16' des Abstandshalters 15' eingreifen, eine rinnenförmige Mulde 20 eingeformt, die das stiftförmige Stellelement 19 in der eingedrückten (versenkten) Position des Abstandshalters 15' aufnimmt.

Wie insbesondere in den Figuren 18 und 25 zu erkennen ist, weisen die Platten 6, 7 des Verbinders 3' Durchbrüche 21 auf, durch die die stiftförmigen Stellelemente 19 beidseitig nach außen geführt sind. ist. Die Durchbrüche 21 sind vorzugsweise als Langlöcher ausgebildet. Sie erstrecken sich im Wesentlichen parallel zur Verschieberichtung des Abstandshalters 15' bzw. rechtwinklig zu den geraden Vorsprüngen 61, 71 der Platten 6, 7. Der Verschiebe- oder Verstellweg des Abstandshalters 15' beträgt beispielsweise ca. 4 mm. Der Boden 18.1 der Vertiefung 18 liegt dementsprechend um mindestens 4 mm versetzt zur benachbarten äußeren Abstützfläche 81 bzw. 82 des Zwischenstücks 8'.

## Patentansprüche

1. Verbinder (3, 3') für rinnenförmige Profilstäbe (1, 2), insbesondere zur Bildung von Sanitärinstallationen, mit zwei einander gegenüberliegenden Platten (6, 7), die durch mindestens ein Befestigungsmittel (9) und ein Zwischenstück (8, 8') miteinander verbunden sind und klemmend an einem rinnenförmigen Profilstab (1, 2) befestigbar sind, wobei an äußeren Kanten der Platten Vorsprünge (61, 71) ausgebildet sind, die in Eingriff mit an den Profilstäben (1, 2) ausgebildeten Nuten (4) bringbar sind, wobei an dem Zwischenstück (8, 8') zwischen den äußeren Kanten der Platten (6, 7) mindestens ein Abstandshalter (15) angeordnet ist, der zur Abstützung eines rinnenförmigen Profilstabes (1, 2) zwischen zwei gegenüberliegenden Wandabschnitten (5) des Profilstabes (1, 2) einfügbar ist, **dadurch gekennzeichnet, dass** der Abstandshalter (15, 15') durch eine Clip-Verbindung oder Steckverbindung lösbar an dem Zwischenstück (8, 8') angebracht ist.

2. Verbinder nach Anspruch 1,
**dadurch gekennzeichnet, dass** der Abstandshalter (15) an seiner dem Zwischenstück (8, 8') zugewandten Seite mindestens zwei Rastvorsprünge (16, 16') aufweist, wobei das Zwischenstück Ausnehmungen (17) oder Hinterschneidungen aufweist, in welche die Rastvorsprünge (16, 16') eingreifen.

3. Verbinder nach Anspruch 2,
**dadurch gekennzeichnet, dass** die Ausnehmungen (17) oder Hinterschneidungen in Längsrichtung des Zwischenstückes (8, 8') gesehen hintereinander angeordnet sind.

4. Verbinder nach einem der Ansprüche 1 bis 3, **dadurch gekennzeichnet, dass** das Zwischenstück (8) an seiner dem Abstandshalter (15) zugewandten Seite eine ebene Stirnfläche (81, 82) besitzt, wobei der Abstandshalter (15) einen Sockel (15.1) aufweist, über den er an der ebenen Stirnfläche (81, 82) anliegt, und wobei der Abstandshalter (15) einen plattenförmigen Abschnitt (15.2) aufweist, der den Sockel (15.1) an zwei entgegengesetzten Seiten überragt.

5. Verbinder nach Anspruch 4,
**dadurch gekennzeichnet, dass** der plattenförmige Abschnitt (15.2) länglich ausgebildet ist, sich im am Zwischenstück (8) angebrachten Zustand in Längsrichtung des Zwischenstückes (8) erstreckt und den Sockel (15.1) an seinen Querseiten überragt.

6. Verbinder nach Anspruch 4 oder 5, jeweils in Rückbeziehung auf Anspruch 2 oder 3,
**dadurch gekennzeichnet, dass** die Rastvorsprünge (16) mit Abstand zu dem Sockel (15.1) an der Unterseite des plattenförmigen Abschnitts (15.2) angeformt sind.

7. Verbinder nach einem der Ansprüche 1 bis 3, **dadurch gekennzeichnet, dass** das Zwischenstück (8') eine Abstützfläche (81, 82) zur Anlage an einer der geschlossenen Seiten (1.1, 1.2, 1.3; 2.1, 2.2, 2.3) des rinnenförmigen Profilstabes (1, 2) aufweist, wobei in der Abstützfläche (81, 82) eine Vertiefung (18) ausgebildet ist, in die der zwischen zwei gegenüberliegenden Wandabschnitten (5) des rinnenförmigen Profilstabes (1, 2) einfügbare Abschnitt (15.2) des Abstandshalters (15') versenkbar ist, sodass die Oberseite dieses Abschnittes (15.2) in dessen versenkter Position in der Ebene der Abstützfläche (81, 82) des Zwischenstücks (8') oder tiefer als diese Ebene liegt.

8. Verbinder nach Anspruch 7,
**dadurch gekennzeichnet, dass** der Abstandshalter (15') mit mindestens einem Stellelement (19) versehen ist, mittels dem er bei versenkter Position aus der Vertiefung (18) des Zwischenstücks (8') herausbewegt werden kann, wobei mindestens eine der Platten (6, 7) einen Durchbruch (21) aufweist, durch den das Stellelement (19) nach außen geführt ist.

9. Verbinder nach Anspruch 8,
**dadurch gekennzeichnet, dass** Stellelement (19) stiftförmig ausgebildet ist und jede der beiden Platten (6, 7) einen Durchbruch (21) aufweist, durch den das Stellelement (19) nach außen geführt ist.

10. Verbinder nach Anspruch 8 oder 9,
**dadurch gekennzeichnet, dass** der Durchbruch (21) als Langloch ausgebildet ist.

11. Verbinder nach einem der Ansprüche 7 bis 10, **dadurch gekennzeichnet, dass** jeder der Rastvorsprünge (16') zwei Ausnehmungen oder Nasen (16.2, 16.3) aufweist, wobei die eine Ausnehmung oder Nase (16.3) einer Rastsicherung des Abstandshalters (15') in dessen versenkten Position und die andere Ausnehmung oder Nase (16.2) einer Rastsicherung des Abstandshalters (15') in dessen gegenüber der Abstützfläche (81, 82) des Zwischenstücks (8') vorstehenden Position dient.

12. Verbindungsanordnung mit mindestens zwei Profilstäben (1, 2), die über einen Verbinder (3, 3') nach einem der Ansprüche 1 bis 11 miteinander verbunden sind, **dadurch gekennzeichnet, dass** mindestens einer der Profilstäbe ein rinnenförmig ausgebildeter Profilstab (1, 2) ist, der an seiner offenen Seite in das Profilinnere umgebogene Wandabschnitte (5) aufweist.

## Claims

1. Connector (3, 3') for trough-shaped profiled bars (1, 2), in particular for forming sanitary installations, comprising two mutually opposed plates (6, 7) which are connected to one another by at least one fixing means (9) and an intermediate piece (8, 8') and can be fixed, in a clamped manner, to a trough-shaped profiled bar (1, 2), protrusions (61, 71) being formed on the outer edges of the plates, which protrusions can be brought into engagement with grooves (4) formed in the profiled bars (1, 2), at least one spacer (15) being arranged on the intermediate piece (8, 8') between the outer edges of the plates (6, 7) and being insertable between two opposed wall portions (5) of the profiled bars (1, 2) to support a channel-shaped profiled bar (1, 2), **characterised in that** the spacer (15, 15') is detachably mounted on the intermediate piece (8, 8') by a clip connection or plug-in connection.

2. Connector according to claim 1, **characterised in that** the spacer (15) comprises at least two latching protrusions (16, 16') on its side facing the intermediate piece (8, 8'), the intermediate piece comprising recesses (17) or undercuts in which the latching protrusions (16, 16') engage.

3. Connector according to claim 2, **characterised in that** the recesses (17) or undercuts are arranged in succession, viewed in the longitudinal direction of the intermediate piece (8, 8').

4. Connector according to any one of claims 1 to 3, **characterised in that** the intermediate piece (8) has a planar end face (81, 82) on its side facing the spacer (15), the spacer (15) comprising a base (15.1) via which it contacts the planar end face (81, 82), the spacer (15) comprising a plate-shaped portion (15.2) which protrudes beyond the base (15.1) at two opposite ends.

5. Connector according to claim 4, **characterised in that** the plate-shaped portion (15.2) is elongate, extends in the longitudinal direction of the intermediate piece (8) when mounted on the intermediate piece (8), and protrudes beyond the short sides of the base (15.1).

6. Connector according to either claim 4 or claim 5, with reference back to claim 2 or claim 3 respectively, **characterised in that** the latching protrusions (16) are integrally moulded on the underside of the plate-shaped portion (15.2) at a distance from the base (15.1).

7. Connector according to any one of claims 1 to 3, **characterised in that** the intermediate piece (8') comprises a support face (81, 82) for contacting one of the closed sides (1.1, 1.2, 1.3; 2.1, 2.2, 2.3) of the trough-shaped profiled bar (1, 2), a recess (18) being formed in the support face (81, 82), in which recess the portion (15.2) of the spacer (15') which can be inserted between two opposed wall portions (5) can be submerged, in such a way that the upper face of said portion (15.2), in the submerged position thereof, lies in the plane of the support face (81, 82) of the intermediate piece (8') or lower than said plane.

8. Connector according to claim 7, **characterised in that** the spacer (15') is provided with at least one adjustment member (19), by means of which it can be moved out of the recess (18) in the intermediate piece (8') when in the submerged position, at least one of the plates (6, 7) comprising an opening through which the adjustment member (19) is guided outwardly.

9. Connector according to claim 8, **characterised in that** the adjustment member (19) is pin-shaped and each of the two plates (6, 7) comprises an opening (21) through which the adjustment member (19) is guided outwardly.

10. Connector according to either claim 8 or claim 9, **characterised in that** the opening (21) is formed as an elongated hole.

11. Connector according to any one of claims 7 to 10, **characterised in that** each of the latching protrusions (16') comprises two recesses or lugs (16.2, 16.3), one of the recesses or lugs (16.3) securing the latching of the spacer (15') in the submerged position thereof, and the other recess or lug (16.2) securing the latching of the spacer (15') in the position thereof protruding beyond the support face (81, 82) of the intermediate piece (8').

12. Connector arrangement comprising at least two profiled bars (1, 2) which are connected to one another by a connector (3, 3') according to any one of claims 1 to 11, **characterised in that** at least one of the profiled bars is a trough-shaped profiled bar (1, 2) which comprises wall portions (5) curved in the interior of the profile on its open side.

## Revendications

1. Connecteur (3, 3') pour tiges profilées en forme de cannelures (1, 2), en particulier pour la réalisation d'installations sanitaires, qui est doté de deux plaques (6, 7), qui, situées à l'opposé l'une de l'autre, sont reliées ensemble par au moins un moyen de fixation (9) et une pièce intermédiaire (8, 8'), et peuvent être fixées, par serrage, sur une tige profilée en forme de cannelure (1, 2), sachant que, sur les bords extérieurs des plaques, sont formées des saillies (61, 71), qui peuvent être enclenchées dans des encoches (4), qui sont formées dans les tiges profilées (1, 2), et sachant que, sur la pièce intermédiaire (8, 8'), entre les bords extérieurs des plaques (6, 7), est disposé au moins un écarteur (15), qui, pour étayer une tige profilée en forme de cannelure (1, 2), peut être inséré entre deux portions de paroi (5) de la tige profilée (1, 2), opposées l'une à l'autre, **caractérisé en ce que** l'écarteur (15, 15') est monté de manière amovible sur la pièce intermédiaire (8, 8'), par clipsage ou par enfichage.

2. Connecteur selon la revendication 1, **caractérisé en ce que** l'écarteur (15) présente, sur sa face orientée vers la pièce intermédiaire (8, 8'), au moins deux saillies d'arrêt (16, 16'), sachant que la pièce intermédiaire présente des évidements (17) ou des contre-dépouilles, dans lesquelles s'engagent les saillies d'arrêt (16, 16').

3. Connecteur selon la revendication 2, **caractérisé en ce que** les évidements (17) ou les contre-dépouilles, vus dans la direction longitudinale de la pièce intermédiaire (8, 8'), sont disposés les uns derrière les autres.

4. Connecteur selon l'une des revendications 1 à 3, **caractérisé en ce que**, sur son côté orienté vers l'écarteur (15), la pièce intermédiaire (8) est dotée d'une face frontale plane (81, 82), sachant que l'écarteur (15) présente un socle (15.1), au moyen duquel il vient porter contre la face frontale plane (81, 82), et que l'écarteur (15) présente une partie en forme de plaque (15.2), qui fait saillie au-delà du socle (15.1), sur deux côtés opposés.

5. Connecteur selon la revendication 4, **caractérisé en ce que** la partie en forme de plaque (15.2) est de forme allongée, que, lorsqu'elle est montée sur la pièce intermédiaire (8), elle s'étend dans la direction longitudinale de ladite pièce intermédiaire (8) et est en saillie du socle (15.1), sur ses côtés transversaux.

6. Connecteur selon revendication 4 ou 5, en relation respective avec revendication 2 ou 3, **caractérisé en ce que** les saillies d'arrêt (16) sont formées à distance du socle (15.1), sur la face inférieure de la partie en forme de plaque (15.2).

7. Connecteur selon l'une des revendications 1 à 3, **caractérisé en ce que** la pièce intermédiaire (8') est dotée d'une surface d'appui (81, 82), qui est destinée à porter contre l'un des côtés fermés (1.1, 1.2, 1.3; 2.1, 2.2, 2.3) de la tiges profilée en forme de cannelure (1, 2), sachant que, dans la surface d'appui (81, 82), est formée une cavité (18), dans laquelle la partie en forme de plaque (15.2) de l'écarteur (15'), insérable entre deux portions de paroi (5) de la tiges profilées en forme de rainure (1, 2), opposées l'une à l'autre, peut être enfoncée, de sorte que la face supérieure de cette partie (15.2) soit située sur le plan de la surface d'appui (81, 82) de la pièce intermédiaire (8') ou plus bas que ce plan, quand elle est dans sa position enfoncée.

8. Connecteur selon la revendication 7, **caractérisé en ce que** l'écarteur (15') est doté d'au moins un élément d'actionnement (19), au moyen duquel il peut être retiré de la cavité (18) de la pièce intermédiaire (8'), dans laquelle il était enfoncé, sachant qu'au moins l'une des plaques (6, 7) est dotée d'un passage (21), à travers lequel l'élément d'actionnement (19) est conduit à l'extérieur.

9. Connecteur selon la revendication 8, **caractérisé en ce que** l'élément d'actionnement (19) présente la forme d'un ergot et que chacune des deux plaques (6, 7) est dotée d'un passage (21), à travers lequel ledit élément d'actionnement (19) est conduit à l'extérieur.

10. Connecteur selon revendication 8 ou 9, **caractérisé en ce que** le passage (21) est réalisé sous la forme d'un trou oblong.

11. Connecteur selon l'une des revendications 7 à 10, **caractérisé en ce que** chacune des saillies d'arrêt (16') est dotée de deux évidements ou de nez (16.2, 16.3), sachant qu'un évidement ou un nez (16.3) sert à assurer le blocage de l'écarteur (15') dans sa position enfoncée, et que l'autre évidement ou nez (16.2) sert à assurer le blocage de l'écarteur (15') dans sa position en saillie de la surface d'appui (81, 82) de la pièce intermédiaire (8').

12. Agencement de connexion avec au moins deux tiges profilées (1, 2), qui sont reliées ensemble par l'intermédiaire d'un connecteur (3, 3') selon l'une des revendications 1 à 11, **caractérisé en ce qu'**au moins l'une des tiges profilées est une tige profilée en forme de cannelure (1, 2), qui, sur son côté ouvert, est dotée d'une portion de paroi (5) recourbée à l'intérieur du profilé.
